# EUROPÄISCHE PATENTSCHRIFT

(11) **EP 0 655 934 B1**
(45) Veröffentlichungstag und Bekanntmachung des Hinweises auf die Patenterteilung: **10.03.1999**
(21) Anmeldenummer: 94918289.3
(22) Anmeldetag: 21.06.1994
(51) Int. Cl.: B01D 29/01, B01D 29/68

(54) **DRUCKFILTER**
PRESSURE FILTER
FILTRE SOUS PRESSION

(30) Priorität: 24.06.1993 DE 4320954
(43) Veröffentlichungstag der Anmeldung: 07.06.1995
(73) Patentinhaber: Maurer, Mike, D-58332 Schwelm (DE); Maurer, Uwe, D-58332 Schwelm (DE)
(72) Erfinder: MAURER, Uwe, D-58332 Schwelm (DE)
(74) Vertreter: Patentanwälte Hauck, Graalfs, Wehnert, Döring, Siemons
(86) Internationale Anmeldenummer: DE9400709
(87) Internationale Veröffentlichungsnummer: WO9500228

(56) Entgegenhaltungen:
- DE-A- 3 734 245
- US-A- 4 085 051

## Beschreibung

Die vorliegende Erfindung betrifft ein Druckfilter mit einem Fluidraum mit einem Fluidzulauf, mindestens einer eine Vielzahl von Öffnungen aufweisenden Filterfläche im Fluidraum, deren eine Seite vom Fluidraum und deren andere Seite von einem Filtratraum begrenzt ist, der einen Filtratablauf aufweist, und einer Rückspüleinrichtung mit einem die Filterfläche überstreichenden und einen Teil der Filterfläche gegenüber dem Fluidraum abdichtenden leisten- oder plattenförmigen Rückspülkopf, der einen mindestens eine zur Filterfläche hin schlitzförmig offene Absaugkammer aufweisenden Rückspülraum begrenzt, an den eine Reject-Ableitung angeschlossen ist. Ein solches Druckfilter ist in der US-A-4 085 051 dargestellt.

Ein derartiges Druckfilter ist auch aus der EP-A-0 479 077 bekannt. Dieses Druckfilter arbeitet mit einer kontinuierlichen Abreinigung der Filterfläche und ist insbesondere für die Abtrennung von Feststoffen aus Suspensionen bestimmt. Zum grundsätzlichen Aufbau eines solchen Druckfilters gehört eine Vielzahl druckfester Filterelemente, die den Fluidraum vom Filtratraum trennen und die Filterfläche bilden, sowie die an die Reject-Ableitung angeschlossene Rückspüleinrichtung mit einem Rückspülkopf, der einen Teil der Filterfläche gegenüber dem Fluidraum abdichtet. Der Rückspülkopf und die Filterfläche sind relativ zueinander bewegbar. Das zu filtrierende Fluid wird mit einem Druck p₁ dem Druckfilter zugeführt und steht im Fluidraum unter diesem Druck p₁ an den Filterelementen an. Das Filtrat läuft mit einem niedrigeren Druck p₂ aus dem Filtratraum ab. In der Reject-Ableitung sowie dem vom Rückspülkopf begrenzten Rückspülraum ist ein Druck p₃ einstellbar, der stets kleiner ist als der Druck p₂ im Filtratraum. Unter der Druckdifferenz zwischen dem Fluidraumdruck p₁ und dem Filtratraumdruck p₂ erfolgt eine Filtration, wobei an der Filterfläche Feststoffe abgeschieden werden und eine Deckschicht bilden. Diese Deckschicht wird kontinuierlich abgereinigt, und zwar durch eine Rückspülung, d.h. eine Umkehrung der Flußrichtung durch die Filterelemente. Die Rückspülung erfolgt an dem Teil der Filterfläche, der vom Rückspülkopf gegenüber dem Fluidraum abgedichtet wird, und zwar unter der Druckdifferenz zwischen dem Druck p₂ im Filtratraum und dem Druck p₃ im Rückspülraum. Der Filtrationsvorgang an der übrigen Filterfläche des Druckfilters wird durch die Rückspülung nicht beeinträchtigt.

Bei dem bekannten Druckfilter weist der Rückspülraum mindestens eine zur Filterfläche hin schlitzförmig offene Absaugkammer auf. Diese Absaugkammer ist als längliche, sich von einer zentralen Antriebswelle für den Rückspülkopf radial nach außen erstreckende Kammer ausgebildet. Beim Drehen des Rückspülkopfes überstreicht die schlitzförmige Öffnung in Form eines vom Zentrum des Druckfilters ausgehenden radialen Strahles die Filterfläche.

Im einzelnen besitzt das bekannte Druckfilter eine Vielzahl von filterflächentragenden Filterplatten, die ortsfest in einem Druckbehälter angeordnet sind. In die zwischen den Filterplatten angeordneten Fluidräume greifen Rückspülköpfe ein, die an einer sich durch den Druckbehälter erstreckenden Hohlwelle angeordnet sind. Die Hohlwelle erstreckt sich seitlich aus dem Druckbehälter heraus und steht dort mit einer geeigneten Antriebseinrichtung in Verbindung. Durch Drehung der Hohlwelle werden somit die einzelnen Rückspülköpfe angetrieben. Ferner dient die Hohlwelle zur Ableitung des über die Rückspülköpfe angesaugten Rejectes. Sämtliche Rückspülköpfe sind am zylindrischen Teil der Hohlwelle befestigt.

Der Erfindung liegt die Aufgabe zugrunde, ein Druckfilter der angegebenen Art zu schaffen, das sich bei kompakter Ausgestaltung und guter Wartungsfreundlichkeit durch eine hohe Durchsatzmenge mit gutem Wirkungsgrad auszeichnet.

Diese Aufgabe wird erfindungsgemäß dadurch gelöst, daß das Druckfilter 2 im Stirnseitenbereich einer Nabe angeordnete Filterflächen aufweist und daß in der Nabe eine Hohlwelle drehbar gelagert ist, die an ihren Stirnseiten mit je einem Rückspülkopf und an ihrem zylindrischen Teil mit einer außerhalb des Fluidraumes angeordneten Antriebseinrichtung gekoppelt ist und deren Innenraum stirnseitig mit den Rückspülräumen der Rückspülköpfe und im zylindrischen Teil der Hohlwelle mit der Reject-Ableitung in Verbindung steht.

Bei der erfindungsgemäßen Lösung sind daher die Filterflächen mit den zugeordneten Rückspülköpfen in den beiden Stirnseitenbereichen der Nabe angeordnet, und der Antrieb der Hohlwelle sowie die Verbindung der Hohlwelle mit der Reject-Ableitung erfolgt am zylindrischen Teil der Welle. Bei dieser Anordnung bleibt daher an den Stirnseiten der Habe bzw. Hohlwelle Platz für je eine Filterfläche mit zugeordnetem Rückspülkopf, die nicht durch die zur Außenseite des Druckfiltergehäuses führende Hohlwelle unterbrochen sind. Damit lassen sich sehr große Filterflächen ausbilden, und es steht ausreichend Platz für eine besonders wirkungsvolle Ausgestaltung der Rückspülköpfe zur Verfügung, so daß bei an sich kompakter Ausgestaltung hohe Durchsatzmengen mit gutem Filterwirkungsgrad erzielbar sind. Eine derartige Ausgestaltung läßt sich darüber hinaus gut warten.

Zwischen den beiden stirn- bzw. endseitig an der Hohlwelle vorgesehenen Filterflächen wird ein abgeschlossener Filtratraum gebildet. Dieser Filtratraum wird radial durch einen die beiden Filterflächen miteinander verbindenden Mantel begrenzt, durch den sich die Antriebsverbindung zur Hohlwelle und die Reject-Ableitung erstrecken. Von hier aus führt ferner eine Filtratauslaufleitung ab. Zur Aussteifung können zwischen den beiden Filterflächen, die von entsprechenden Filterelementen getragen werden, weitere Stützringe bzw. Rippen vorgesehen sein, die entsprechende Öffnungen für den Filtratdurchtritt aufweisen.

Die Erfindung schließt nicht aus, daß zusätzlich zu den beiden endseitig angeordneten Filterflächen zwischen diesen weitere Filterflächen angeordnet sind, so daß der Filtratraum entsprechend unterteilt wird. Erfindungswesentlich ist aber immer, daß an beiden End- bzw. Stirnseiten der Nabe Filterflächen und an beiden End- bzw. Stirnseiten der Hohlwelle entsprechende Rückspülköpfe angeordnet sind, die axial außerhalb der Filterflächen liegen. Schließlich soll sich die Hohlwelle nicht aus dem Druckfiltergehäuse heraus erstrecken, sondern zu deren Antrieb ist ein rechtwinklig zur Hohlwelle verlaufendes gesondertes Antriebsglied vorgesehen.

Auch die Auslaufleitung für das Filtrat ist vorzugsweise am Mantel des die Filtratkammer umschließenden Filterteiles vorgesehen und nicht an den beiden Stirn- bzw. Endwänden dieses Filterteiles. Somit führen vorzugsweise sämtliche Zu- und Ableitungen sowie Antriebselemente in bezug auf die Nabe und Hohlwelle radial in das Druckfilter, so daß die beiden Endseiten des die Filtratkammer umgebenden Filterteiles vollständig zur Anordnung der Rückspülköpfe genutzt werden. Vorzugsweise sind sämtliche Zu- und Ableitungen sowie Antriebselemente in einem gemeinsamen Schutzrohr angeordnet, das, wie nachfolgend ausgeführt, auch als Trägerrohr für den die Filtratkammer umgebenden Teil des Filters ausgebildet sein kann. Bei einer solchen Ausführungsform muß das Druckfilter kein eigenes Gehäuse besitzen, sondern kann über das erwähnte Trägerrohr an einer geeigneten Stelle, beispielsweise außerhalb eines Behälters, in den das Druckfilter eingeführt ist, gelagert sein.

Wie bereits erwähnt, wird das Reject von den Rückspülräumen der beiden Rückspülköpfe über den Innenraum der Hohlwelle zu einer Reject-Ableitung geführt und von dort aus dem Druckfilter herausgeführt. Vorzugsweise weist dabei die Nabe einen die Hohlwelle umgebenden Hohlraum auf, an den die Reject-Ableitung angeschlossen ist und der über mindestens eine Öffnung in der Hohlwellenwandung mit dem Innenraum der Hohlwelle in Verbindung steht. Die beim Rückspülvorgang rotierende Hohlwelle gibt somit über die in ihrer Wandung vorgesehene mindestens eine Öffnung das Reject an den Hohlraum in der Hohlwelle und von dort in die Reject-Ableitung ab. An diesen Hohlraum kann auch eine zum Entlüften der Hohlwelle dienende Leitung angeschlossen sein, die ebenfalls radial in die Nabe mündet.

Wie erwähnt, erfolgt der Antrieb der Hohlwelle zur Durchführung des Rückspülvorganges über ein sich rechtwinklig zur Hohlwelle erstreckendes Antriebselement, das radial aus dem Druckfilter herausführt und mit einer geeigneten Antriebseinrichtung, beispielsweise einem Elektromotor mit vorgelagertem Getriebe, in Verbindung steht. Das Antriebselement erstreckt sich dabei radial durch die Filtratkammer und ist von einem Schutzrohr umgeben. So erstreckt sich vorzugsweise von der Antriebseinrichtung eine in einem Schutzrohr angeordnete Antriebswelle bis in einen Hohlraum der Nabe und ist dort mit der Hohlwelle gekoppelt. Zur Kopplung weisen die Antriebswelle und die Hohlwelle je ein Tellerrad bzw. Kegelrad auf, die miteinander kämmen.

Die Verbindung zwischen der Hohlwelle und den stirnseitig hiervon angeordneten Rückspülköpfen erfolgt zweckmäßigerweise über drehfest mit den Rückspülköpfen und der Hohlwelle verbundene hohle Übergangsstutzen. Diese Übergangsstutzen sichern einerseits die Befestigung der Rückspülköpfe an der Hohlwelle und weisen andererseits eine Durchführung für das in die Hohlwelle einzuführende Reject auf. Die hohlen Übergangsstutzen weisen vorzugsweise einen Rohrabschnitt auf, der in einen Ringflansch übergeht, welcher an einem entsprechenden Teil des Rückspülkopfes, beispielsweise dessen Trägerplatte, befestigt ist.

Das erfindungsgemäß ausgebildete Druckfilter kann in üblicher Weise ein Gehäuse aufweisen, das den die Filtratkammer umschließenden Teil des Filters umgibt und einen entsprechenden Fluidraum umgrenzt, in den der Zulauf für das zu filternde Gemisch mündet. Der die Filtratkammer umgebende Teil des Filters, d. h. der Innenteil desselben, ist hierbei vorzugsweise über Rippen am Filtergehäuse befestigt. Bei dieser Ausführungsform übernehmen daher die aus dem Filtergehäuse herausgeführten Rohre bzw. Leitungen keine Trägerfunktion für den Innenteil des Filters.

Bei einer anderen Ausführungsform, die bereits eingangs erwähnt wurde, ist der den Filtratraum umschließende Filterteil über ein Trägerrohr an einer Lagereinrichtung befestigt. Das Trägerrohr ist hierbei am Mantel des den Filtratraum umschließenden Filterteiles fixiert und nimmt sämtliche Antriebsteile bzw. Leitungen auf, so daß diese innerhalb des Trägerrohres durch den Fluidraum und ggf. auch durch den Filtratraum zur Nabe bzw. Hohlwelle geführt sind. Ein solches Trägerrohr dient daher gleichzeitig zum Herausführen der Antriebselemente und Leitungen sowie als Trägerelement für den Innenteil des Filters.

Das äußere Ende des Trägerrohres kann beispielsweise an einem Mannlochdeckel befestigt sein. Dieser Mannlochdeckel dient zum Verschließen des Mannloches eines Behälters, in den der Innenteil des Druckfilters eingesetzt wird. Bei dieser Ausführungsform ist daher kein spezielles Gehäuse für das Druckfilter vorgesehen bzw. erforderlich. Statt dessen kann das Druckfilter in jeden ausreichend großen Druckbehälter eingeführt werden, um das in diesem Behälter befindliche Fluid zu filtern. Die Befestigung des Druckfilters erfolgt hierbei über das Trägerrohr, das an dem entsprechenden Mannlochdeckel des Behälters befestigt ist.

Bei einer speziellen Ausführungsform der Erfindung verlaufen somit die Antriebswelle, die Reject-Ableitung, entsprechende Entlüftungsleitungen für den Filtratraum und die Hohlwelle sowie eine Filtratauslaufleitung für den Filtratraum durch das Trägerrohr.

Das Trägerrohr kann sich auch durch den Filtratraum bis zur Nabe erstrecken. Bei einer anderen Ausführungsform hört es jedoch am Mantel des den Filtratraum umschließenden Filterteiles auf, und die einzelnen Antriebsteile und Leitungen sind einzeln ohne Trägerrohr zur Nabe weitergeführt, wobei die Antriebswelle von einem kleineren Schutzrohr umgeben ist.

Die Erfindung wird nachfolgend anhand von Ausführungsbeispielen in Verbindung mit der Zeichnung im einzelnen erläutert. Es zeigen:
- Figur 1: einen Vertikalschnitt durch eine erste Ausführungsform eines erfindungsgemäß ausgebildeten Druckfilters;
- Figur 2: eine Ansicht des Druckfilters der Figur 1 mit entfernter Gehäusewand und teilweise entferntem Rückspülkopf sowie Filterelement; und
- Figur 3: einen Vertikalschnitt ähnlich Figur 1 durch eine weitere Ausführungsform eines erfindungsgemäß ausgebildeten Druckfilters.

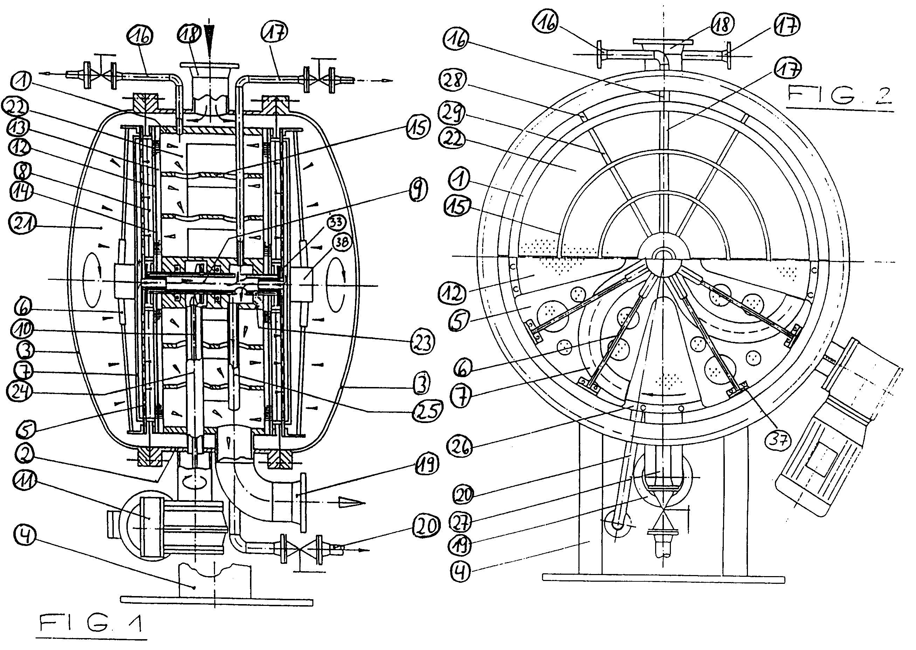

Das in den Figuren 1 und 2 dargestellte Druckfilter besitzt einen Tragring 1, an dessen Innenseite Stützringe 15 und Rippen 29 so miteinander verbunden sind, daß mittig eine Nabe 23 gehalten wird. Der Tragring 1 ist an seinen beiden offenen Seiten durch je ein kreisförmiges Filterelement 12 geschlossen, das sich aus einer ersten und zweiten Lochplatte 13 zusammensetzt, zwischen denen sich ein geeignetes Filtervlies aus textilem Material befindet. Diese Filterelemente bilden jeweils eine Filterfläche. Das ringförmige Gebilde aus dem Tragring 1 und den beiden Filterelementen 12 ist in einem Gehäuse 3 angeordnet, das eine Fluidkammer 21 bildet, die über einen Zulauf 18 mit dem zu filtrierenden Fluid versorgt wird. Innerhalb des ringförmigen Gebildes aus Tragring 1 und Filterelementen 12 befindet sich eine Filtratkammer, an die eine Filtratauslaßleitung 19 angeschlossen ist.

Durch die Nabe 23 erstreckt sich eine Hohlwelle 9, die an beiden Enden offen ist. Sie wird durch Gleitlager, Kugellager und Dichtungen geführt, die verhindern, daß Fluid in den Hohlwellenbereich gelangen kann. In die offenen Enden der Hohlwelle 9 sind Übergangsstutzen gesetzt, die sich zusammen mit der Hohlwelle drehen. An diesen sich flanschförmig erweiternden Übergangsstutzen ist jeweils eine Trägerplatte 5 drehfest fixiert.

Das Innere der Hohlwelle steht mit einer Entlüftungsleitung 17 und mit einer Reject-Ableitung 25 in Verbindung. Beide Leitungen sind durch die Filtratkammer geführt und außerhalb des Druckfilters jeweils mit Absperrventilen (bei 20 gezeigt) versehen. Auch von der Filtratkammer führt eine Entlüftungsleitung 16, die ein geeignetes Absperrventil aufweist, aus dem Druckfilter heraus.

Das ringförmige Gebilde aus Tragring 1, den beiden Filterelementen 12 und den Stützringen 15 und Rippen 29 sowie die entsprechenden Leitungen 16, 17, 19, 25 sind stationär im Gehäuse 3 angeordnet.

Das Druckfilter weist zwei Rückspülköpfe auf, von denen jeder einem Filterelement 12 zugeordnet ist und dessen Filterfläche überstreicht. Die Rückspülköpfe bestehen aus einer Trägerplatte 5 und einer Vielzahl von spiralförmig gekrümmten Rückspülleisten 8, die an der Trägerplatte befestigt sind. Die Form der Rückspülleisten 8 ist in Figur 2 zu erkennen, wobei dort der über der Trägerplatte 5 befindliche Ableitteil 7 der Rückspülleisten gezeigt ist. Die Trägerplatte 5 weist zwischen den einzelnen Rückspülleisten 8 Ausnehmungen auf, damit Fluid aus der Fluidkammer 21 durch die Filterflächen in die Filtratkammer dringen kann. Die Rückspülleisten 8 weisen in ihrem Inneren Absaugkammern auf und sind an ihrer der Filterfläche zugewandten Seite mit einer spiralförmig gekrümmten schlitzförmigen Öffnung versehen, mittels der der Rückspülvorgang durchgeführt wird. Über die spiralförmige schlitzförmige Öffnung wird die als Deckschicht auf der Filterfläche ausgebildete Substanz abgesaugt und durch in der Trägerplatte 5 ausgebildete Öffnungen dem Reject-Ableitteil 7 der Rückspülleisten zugeführt, von wo aus das Reject radial nach innen in die Hohlwelle 9 und von dort über die Reject-Ableitung 25 aus dem Druckfilter herausgelangt.

Der Antrieb der Rückspülköpfe erfolgt über die Hohlwelle 9, die auf ihrer Außenseite mit einem Tellerrad verbunden ist, das mit einem Kegelrad einer Antriebswelle 10 kämmt, welche in einem durch die Fluidkammer und Filtratkammer geführten Rohr 24 angeordnet ist. Die Antriebswelle 10 wird über einen geeigneten Antriebsmotor 11 in Drehungen versetzt. Das ganze Druckfilter ist auf einem geeigneten Gestell 4 angeordnet.

Wie die Figuren 1 und 2 desweiteren zeigen, ist jeder Rückspülkopf mit einer Vielzahl von Federstützen 6 versehen, die sich von der Mitte des Rückspülkopfes bis zu dessen radialen Endbereich erstrecken. Die Federstützen 6 erstrecken sich hierbei zwischen Laschen 37, die am Rand einer jeden Trägerplatte 5 befestigt sind, und einem zentral an der jeweiligen Trägerplatte angeordneten Abstützblock 38, wobei die Federstützen zwischen den zentralen Abstützblock 38 und die zugehörige Lasche 37 geklemmt sind. Die Federstützen 6 stehen unter Vorspannung und üben eine entsprechende Kraft auf die Lasche 37 aus, so daß auf den radial äußeren Randbereich der zugehörigen Trägerplatte 5 ein Moment ausgeübt wird, das diesen Randbereich der Trägerplatte in Richtung auf die entsprechende Filterfläche drückt.

Figur 2 zeigt, daß jedem Arm der Trägerplatte 5 zwei Federstützen zugeordnet sind, die sich über die entsprechenden Hohlleisten erstrecken. Die Federstützen sorgen dafür, daß die gekrümmt ausgebildeten Hohlleisten mit der entsprechenden gekrümmten schlitzförmigen Öffnung überall gleichmäßig an die Filterfläche angedrückt werden, so daß die für die Rückspülung benötigte Druckdifferenz aufrechterhalten wird.

Wie erwähnt, besitzt bei dieser Ausführungsform das Druckfilter ein Druckgehäuse 3, das den Innenteil des Filters umschließt und einen Fluidraum bildet. Die Befestigung des Innenteils am Druckgehäuse 3 erfolgt hierbei über Rippen 28 in Fortsetzung der Rippen 29 innerhalb des Filtratraumes, wie in Figur 2 gezeigt. Die beiden Entlüftungsleitungen 16, 17 für den Filtratraum und die Hohlwelle sind in Figur 1 nach oben aus dem Druckfiltergehäuse 3 herausgeführt, während sich die Antriebswelle 10 mit zugehörigem Schutzrohr und die Reject-Ableitung 25 in Figur 1 nach unten aus dem Druckfiltergehäuse 3 heraus erstrecken. Auch die Filtratauslaßleitung 19 erstreckt sich in Figur 1 nach unten aus der Filtratkammer heraus.

Man erkennt somit, daß sämtliche Leitungen und Antriebsteile radial aus dem Innenteil des Filters herausgeführt sind, so daß die beiden End- bzw. Stirnflächen vollständig als Filterflächen mit zugehörigen Rückspülköpfen genutzt werden können.

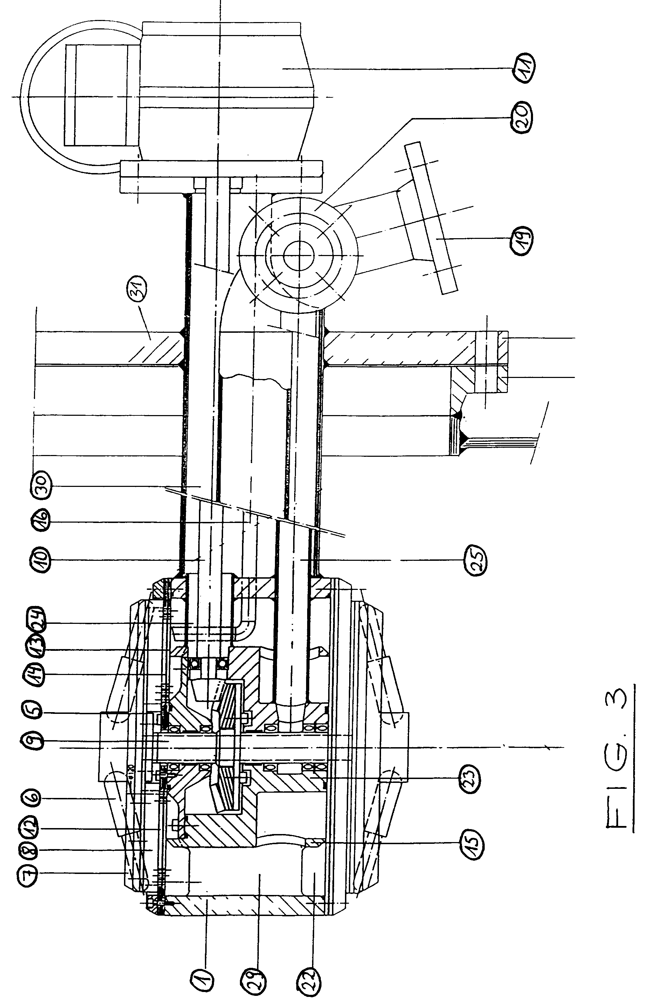

Figur 3 zeigt eine weitere Ausführungsform eines Druckfilters gemäß der Erfindung. Diese Ausführungsform entspricht in ihrem grundlegenden Aufbau der Ausführungsform der Figuren 1 und 2, weist jedoch im Gegensatz zu dieser kein eigenes Druckfiltergehäuse auf. Desweiteren sind herbei sämtliche zum Innenteil des Filters führende Leitungen sowie Antriebselemente in einem gemeinsamen Trägerrohr 30 angeordnet, das gleichzeitig als Schutzrohr für die Leitungen und Antriebselemente dient. Mit Hilfe des Trägerrohres 30, das an den Tragring 1 des Filterinnenteiles geschweißt ist, erfolgt die Lagerung des Filterinnenteiles. Das Filter kann daher in beliebige Druckbehälter eingesetzt werden und in diesen seine Filterfunktion erfüllen. Hierzu wird das Filter mit Hilfe des Trägerrohres 30 durch ein Mannloch im Behälter eingeführt. Ein Mannlochdeckel 31 entsprechender Größe ist an das Trägerrohr 30 angeschweißt, so daß eine Befestigung des Druckfilters über den Mannlochdeckel 31 am entsprechenden Behälter durchgeführt werden kann. Das Druckfilter kann daher für beliebig große Behälter beliebiger Form verwendet werden, wobei lediglich der am Trägerrohr 30 befestigte Mannlochdeckel 31 an die entsprechende Mannlochgröße des jeweiligen Behälters angepaßt werden muß.

Das Trägerrohr 30 erstreckt sich bis zum Tragring 1. Es nimmt bei dieser Ausführungsform die mit dem Kegelrad versehene Antriebswelle 10 für die Hohlwelle 9, die Reject-Ableitung 25, eine Entlüftungsleitung 16 für den Filtratraum und die Filtratauslaßleitung 19 auf. Eine Entlüftungsleitung für die Hohlwelle kann ebenfalls aufgenommen werden, ist jedoch bei dieser Ausführungsform nicht dargestellt.

Man erkennt, daß das Trägerrohr sich nicht durch die Filtratkammer erstreckt. Hierin laufen vielmehr die einzelnen Leitungen getrennt weiter, wobei die Antriebswelle von einem Schutzrohr umgeben ist. Die Nabe 23 erweitert sich in der Figur 3 in Radialrichtung von links nach rechts, wobei im erweiterten Teil ein Hohlraum angeordnet ist, der ein vergrößertes Tellerrad der Hohlwelle 9 aufnimmt, das mit dem Kegelrad am Ende der Antriebswelle 24 kämmt. Im linken Teil der Nabe mit kleinerem Durchmesser ist ein kleinerer Hohlraum vorgesehen, der zur Abführung des Rejectes aus der Hohlwelle in die Reject-Ableitung 25 dient. Auch bei dieser Ausführungsform ist die Hohlwelle 9 innerhalb der Nabe 23 über Gleitlager, Kugellager und Dichtungen gelagert.

Die übrigen Teile des Druckfilters sind entsprechend ausgebildet wie die der Ausführungsform der Figuren 1 und 2 und mit den gleichen Bezugszeichen versehen. Als Antrieb 11 findet ein Doppelstirnradgetriebemotor Verwendung.

Das Druckfilter dieser Ausführungsform kann seitlich, stehend oder hängend bei einer entsprechenden Größenauslegung direkt in beliebige Druckbehälter oder Lagerbehälter eingebaut werden. Das Filter zeichnet sich durch seinen geringen Platzbedarf und seine hohe Durchsatzmenge sowie seine Wartungsfreundlichkeit aus, zumal keine Lagerhaltung und nur geringe Entsorgungsprobleme auftreten. Ausgelegt ist das Filter für Drücke bis 20 bar und Temperaturen bis + 120°C. Das Filter kann ohne weiteres auch lebensmittelgerecht gefertigt werden. Als Materialien kommen Normalstahl, VA zur Anwendung, die ggf. ausgekleidet oder gummiert sind.

## Patentansprüche

1. Druckfilter mit einem Fluidraum (21) mit einem Fluidzulauf (18), mindestens zwei eine Vielzahl von Öffnungen aufweisenden Filterflächen im Fluidraum (21), deren eine Seite vom Fluidraum (21) und deren andere Seite von einem Filtratraum begrenzt ist, der einen Filtratablauf (19) aufweist, und mindestens zwei Rückspüleinrichtungen mit je einem die Filterfläche überstreichenden und einen Teil der Filterfläche gegenüber dem Fluidraum (21) abdichtenden leisten- oder plattenförmigen Rückspülkopf, der einen mindestens eine zur Filterfläche hin schlitzförmig offene Absaugkammer aufweisenden Rückspülraum begrenzt, an den eine Reject-Ableitung (25) angeschlossen ist, wobei im Filter eine Hohlwelle (9) drehbar gelagert ist, die mit mindestens zwei Rückspülköpfen und einer außerhalb des Fluidraumes (21) angeordneten Antriebseinrichtung (11) gekoppelt ist und deren Innenraum mit den Rückspülräumen der Rückspülköpfe und mit der Reject-Ableitung (25) in Verbindung steht, dadurch gekennzeichnet, daß die Filterflächen im Stirnseitenbereich einer Nabe (23) angeordnet sind, daß die Hohlwelle (9) in der Nabe (23) drehbar gelagert ist und an ihren Stirnseiten mit je einem Rückspülkopf sowie an ihrem zylindrischen Teil mit der Antriebseinrichtung (11) gekoppelt ist und daß der Innnenraum der Hohlwelle (9) stirnseitig mit den Rückspülräumen der Rückspülköpfe und im zylindrischen Teil mit der Reject-Ableitung (25) in Verbindung steht.

2. Druckfilter nach Anspruch 1, dadurch gekennzeichnet, daß die Nabe (23) einen die Hohlwelle (9) umgebenden Hohlraum aufweist, an den die Reject-Ableitung (25) angeschlossen ist und der über mindestens eine Öffnung in der Hohlwellenwandung mit dem Innenraum der Hohlwelle (9) in Verbindung steht.

3. Druckfilter nach Anspruch 2, dadurch gekennzeichnet, daß an den Hohlraum in der Nabe (23) eine Entlüftungsleitung (17) angeschlossen ist.

4. Druckfilter nach einem der vorangehenden Ansprüche, dadurch gekennzeichnet, daß sich von der Antriebseinrichtung (11) eine in einem Schutzrohr (24) angeordnete Antriebswelle (10) bis in einen Hohlraum der Nabe (23) erstreckt und dort mit der Hohlwelle (9) gekoppelt ist.

5. Druckfilter nach Anspruch 4, dadurch gekennzeichnet, daß Antriebswelle (10) und Hohlwelle (9) je ein Tellerrad bzw. Kegelrad aufweisen, die miteinander kämmen.

6. Druckfilter nach einem der vorangehenden Ansprüche, dadurch gekennzeichnet, daß die Hohlwelle (9) über drehfest mit den Rückspülköpfen und der Hohlwelle (9) verbundene hohle Übergangsstutzen (33) mit den Rückspülköpfen gekoppelt ist.

7. Druckfilter nach einem der vorangehenden Ansprüche, dadurch gekennzeichnet, daß das den Filtratraum umschließende Filterteil über Rippen (28) an einem Filtergehäuse (3) befestigt ist.

8. Druckfilter nach einem der Ansprüche 1 bis 6, dadurch gekennzeichnet, daß der den Filtratraum umschließende Filterteil über ein Trägerrohr (30) an einer Lagereinrichtung befestigt ist.

9. Druckfilter nach Anspruch 8, dadurch gekennzeichnet, daß das Trägerrohr (30) die Antriebswelle (10) und die Reject-Ableitung (25) aufnimmt.

10. Druckfilter nach einem der Ansprüche 8 oder 9, dadurch gekennzeichnet, daß das Trägerrohr (10) an einem Mannlochdeckel (31) befestigt ist.

11. Druckfilter nach einem der Ansprüche 8 bis 10, dadurch gekennzeichnet, daß das Druckfilter kein eigenes Gehäuse besitzt.

## Claims

1. A pressure filter comprising a fluid compartment (21) with a fluid inlet (18), at least two filter surfaces having a plurality of openings within the fluid compartment (21), one side of the filter surfaces being delimited by the fluid compartment (21) and the other side thereof being delimited by a filtrate compartment having a filtrate outlet (19), and at least two backwashing means having each a slat-like or plate-like backwashing head sweeping over the filter surface and sealing a part of the filter surface with respect to the fluid compartment (21), the backwashing head delimiting a backwashing compartment having at least one suction chamber open to the filter surface in a slot-like manner and connected to a reject discharge line (25), wherein a hollow shaft (9) is rotatably supported within the filter and is connected to at least two backwashing heads and a drive means (11) disposed outside of the fluid compartment (21), the interior space of the hollow shaft being connected to the backwashing compartments of the backwashing heads and to the reject discharge line (25), characterized in that the filter surfaces are disposed within the front side range of a hub (23), the hollow shaft (9) is rotatably supported within the hub (23) and is connected to a respective backwashing head at its front sides and to the drive means (11) at its cylindrical portion, and the interior space of the hollow shaft (9) is connected to the backwashing compartments of the backwashing heads at its front sides and is connected to the reject discharge line (25) in its cylindrical portion.

2. The pressure filter according to claim 1, characterized in that the hub (23) has a hollow space surrounding the hollow shaft (9) and connected to the reject discharge line (25) and connected to the interior space of the hollow shaft (9) through at least one opening in the wall of the hollow shaft.

3. The pressure filter according to claim 2, characterized in that a venting line (17) is connected to the hollow space in the hub (23).

4. The pressure filter according to one of the preceding claims, characterized in that a drive shaft (10) disposed within a protection tube (24) extends from the drive means (11) to a hollow space of the hub (23) and is connected to the hollow shaft (9) there.

5. The pressure filter according to claim 4, characterized in that the drive shaft (10) and the hollow shaft (9) each have a dish gear or bevel gear meshing with one another.

6. The pressure filter according to one of the preceding claims, characterized in that the hollow shaft (9) is connected to the backwashing heads by means of hollow connection pieces connected to the backwashing heads and to the hollow shaft (9) in a rotatably fixed manner.

7. The pressure filter according to one of the preceding claims, characterized in that the filter portion enclosing the filtrate compartment is fixed to a filter housing (3) by means of ribs (28).

8. The pressure filter according to one of the claims 1 to 6, characterized in that the filter portion enclosing the filtrate compartment is fixed to a support means by means of a carrier tube (30).

9. The pressure filter according to claim 8, characterized in that the carrier tube (30) takes up the drive shaft (10) and the reject discharge line (25).

10. The pressure filter according to one of the claims 8 or 9, characterized in that the carrier tube (10) is fixed to a man hole cover (31).

11. The pressure filter according to one of the claims 8 to 10, characterized in that the pressure filter does not have an own housing.

## Revendications

1. Filtre sous pression, comportant une chambre à fluide (21) avec une amenée de fluide (18), au moins deux surfaces de filtration présentant un grand nombre d'ouvertures dans la chambre de fluide (21), dont un côté est délimité par la chambre à fluide (21) et dont l'autre côté est délimité par une chambre à filtrat, et qui présente une évacuation de filtrat (19), et au moins deux dispositifs de rinçage à courant inverse comportant chacun une tête de rinçage à courant inverse en forme de languette au de plaque, recouvrant la surface de filtration et rendant une partie de la surface de filtration étanche par rapport à la chambre à fluide (21), laquelle tête délimite une chambre de rinçage à courant inverse présentant au moins une chambre d'aspiration en forme de fente ouverte sur la surface de filtration, laquelle chambre de rinçage à courant inverse est raccordée à un conduit de rejet (25), un arbre creux (9) étant monté dans le filtre de manière à pouvoir y tourner et étant couplé à au moins deux têtes de rinçage à courant inverse et à un dispositif d'entraînement (11) disposé à l'extérieur de la chambre à fluide (21), l'espace intérieur de l'arbre creux étant en communication avec les chambres de rinçage à courant inverse des têtes de rinçage à courant inverse et avec le conduit de rejet (25), caractérisé en ce que les surfaces de filtration sont disposées dans la région des faces frontales d'un moyeu (23), en ce que l'arbre creux (9) est monté dans le moyeu (23) de manière à pouvoir y tourner et est couplé à une tête de rinçage inverse par chacune de ses faces frontales et au dispositif d'entraînement (11) par sa partie cylindrique, et en ce que la partie frontale de l'espace intérieur de l'arbre creux (9) est en communication avec les chambres de rinçage à courant inverse des têtes de rinçage à courant inverse et sa partie cylindrique avec le conduit de rejet (25).

2. Filtre sous pression selon la revendication 1, caractérisé en ce que le moyeu (23) présente un espace creux entourant l'arbre creux (9) et auquel le conduit de rejet (25) est raccordé, et qui est en communication avec l'espace intérieur de l'arbre creux (9) par l'intermédiaire d'au moins une ouverture pratiquée dans la paroi de l'arbre creux.

3. Filtre sous pression selon la revendication 2, caractérisé en ce qu'un conduit d'évacuation d'air (17) est raccordé à l'espace creux situé dans le moyeu (23).

4. Filtre sous pression selon l'une des revendications précédentes, caractérisé en ce qu'un arbre d'entraînement (10) disposé dans un tube de protection (24) s'étend entre le dispositif d'entraînement (11) et un espace creux du moyeu (23), où il est couplé à l'arbre creux (9).

5. Filtre sous pression selon la revendication 4, caractérisé en ce que l'arbre d'entraînement (10) et l'arbre creux (9) présentent chacun une couronne ou un pignon conique qui s'engrènent mutuellement.

6. Filtre sous pression selon l'une des revendications précédentes. caractérisé en ce que l'arbre creux (9) est couplé aux têtes de rinçage à courant inverse par l'intermédiaire de raccords intermédiaires creux (33) non rotatifs reliés aux têtes de rinçage à courant inverse et à l'arbre creux (9).

7. Filtre sous pression selon l'une des revendications précédentes, caractérisé en ce que la partie du filtre qui entoure la chambre à filtrat est fixée à un boîtier de filtre (3) par l'intermédiaire de nervures (28).

8. Filtre sous pression selon l'une des revendications 1 à 6, caractérisé en ce que la partie du filtre qui entoure la chambre à filtrat est fixée à un dispositif de montage par l'intermédiaire d'un tube de support (30).

9. Filtre sous pression selon la revendication 8, caractérisé en ce que le tube de support (30) reçoit l'arbre d'entraînement (10) et le conduit de rejet (25).

10. Filtre sous pression selon l'une des revendications 8 ou 9, caractérisé en ce que le tube de support (10) est fixé au couvercle (31) d'un trou d'homme.

11. Filtre sous pression selon l'une des revendications 8 à 10, caractérisé en ce que le filtre sous pression ne possède pas de boîtier propre.
